# EUROPEAN PATENT APPLICATION

(11) **EP 1 998 533 A1**
(43) Date of publication of application: **03.12.2008**
(21) Application number: 07290681.1
(22) Date of filing: 31.05.2007
(51) Int. Cl.: H04L 29/08

(54) **System for interacting with services**

(71) Applicant: Alcatel Lucent, 75008 Paris (FR)
(72) Inventor: Van Broeck, Sigurd, 2980 Zoersel (BE); Lou, Zhe, 2000 Antwerpen (BE); Brackx, Michael Frederik François Albert, 9000 Gent (BE); Trappeniers, Lieven Leopold Albertine, 2200 Herentals (BE); Godon, Marc Bruno Frieda, 1840 Londerzeel (BE); Criel, Johan Georges Prosper, 9000 Gent (BE)
(74) Representative: Plas, Axel Ivo Michel

(57) **Abstract**

The present invention relates to a system for interacting with one or more services in a service delivery platform (106). The system comprises one or more examined objects (104; 202, 203, 204) able to hold information indicative for the action and/or the media and one or more examining objects (103; 201) able to retrieve information from the examined objects (104; 202, 203, 204). The system determines the action based on a combination of pieces of the information.

## Description

### Field of the Invention

The present invention generally relates to interacting with services such as Internet Protocol Television (IPTV), games, interactive PC or mobile applications, etc. A specific example is the selection of media and interaction with a media delivery system such as IPTV or computer software.

### Background of the Invention

A well known device for interaction with TV, media or other services is a remote control. A remote control for television sets or other media appliances typically comprises a set of standard buttons such as numbered buttons, buttons to control audio volume, brightness, contrast, buttons to toggle the power of the television set, etc. By pushing the button, the viewer determines the action to be taken. Additional interactive features such as teletext use both standard buttons, for instance the numbered buttons to indicate a desired page number, and additional buttons, for instance to switch between television mode and teletext mode or coloured buttons to quickly access particular pages. Other interactive services related to digital television such as video-on-demand, pausing live broadcasts, consulting a television guide, managing customer made content etc. require even more buttons on a remote control to navigate menus and select actions, or a separate remote control to interact with such services.

A remote control is thus rather limited in functionality by design. It is not possible to extend a remote control with new functionality that requires new buttons on the remote. A possible solution to this problem is the use of touch-screen devices which show a number of soft-keys on the touch-screen. These soft-keys can be adapted to a particular application or service. However, remote controls with touch-screens are generally more expensive than a regular remote control, more expensive to produce and can easily be damaged, for instance when dropped on a hard surface. The displayed buttons and functionality of such a touch-screen remote control is subject to the software running thereon. Thus, the software has to be updated to support any new applications or services that are controlled with the remote control. This means that the remote control requires an ability to update the software. However, the general public may not posses the skills to perform such updates. In conclusion, a remote control can either be of a fixed layout which cannot be extended to support new features but which is easy to use and is more robust or it can have a dynamic layout which is difficult to update to new features, more expensive and prone to damage.

An additional problem with the known remote controls is their complexity. A large number of buttons means that a person has to be able to read the markings on each button and understand the function of each button. However, a person with limited eyesight may not be able to see the markings on buttons or may even be unable to see the individual buttons. A complex layout of a remote control may also be hard to understand for a disabled person. Furthermore, a person may not have the ability to physically operate a remote control with a complex layout, small buttons or buttons that are placed close to each other.

Alternatives to a remote control are personal computer input devices such as keyboards, mice, gamepads or joysticks. These devices are designed as generic input devices and rely on the software of the personal computer to support their functionalities. For instance, an operating system provides a mapping of key presses on a keyboard into characters for the software on the computer and thus allows a user to enter text and numbers in a text editor or spreadsheet. A computer game can interpret entered characters as commands for moving characters or performing actions in the game. Media player software can interpret characters as commands to control the media playback, for instance play, pause or stop a media file. This shows that such input devices are very versatile as they can be used in a wide range of applications but that each application needs proper support. Devices such as television sets, video recorders, set-top boxes, etc. cannot provide the proper support for each type of input device and their various design forms.

Another known method for obtaining input is the Nokia NFC Shell for Nokia 3220. This shell is an add-on for a Nokia 3220 mobile telephone which enables the telephone to read NFC tags. These tags contain a shortcut to a particular service (call dialling, web browsing, SMS sending) which trigger the telephone to perform that particular action in relation to the address or telephone number in the shortcut. However, this system works with fixed tags and has a limited number of function. Existing tags may be overwritten but this requires effort from a user to configure a tag with new information, In addition, new services need proper software support on the mobile telephone which requires updates of the firmware or the installation of additional software and which is not always an easy task for the general public. For instance, faulty firmware updates may cause permanent damage to the device and the installation of additional software requires the presence of a working communication link such as Global Packet Radio Service (GPRS) or a memory module reader to upload the software to the mobile telephone.

It is an objective of the present invention to provide a system which can be used for interacting with services and which can easily be extended with additional features. It is another objective of the present invention to provide a system that is accessible to disabled people.

### Summary of the Invention

According to the present invention, the above objectives are realized by a system for interacting with one or more services in a service delivery platform comprising means for determining an action, characterized in that the system comprises one or more examined objects able to hold information indicative for the action and/or the services and that the system comprises one or more examining objects able to retrieve the information from the examined objects, and the system is further characterized in that the means for determining an action are adapted to determine the action based on a combination of at least two pieces of information.

Indeed, by retrieving multiple pieces of information from one or more examined object, the service delivery platform can be triggered to perform particular actions. These actions can be selecting media content, providing feedback to content such as answers to questions in a quiz, rating products in commercials, interaction with educational media, requesting advertisements, establishing a communication channel, etc. The information stored in an examined object can define part of the action itself, for instance "send answer", or "select television" but may also be an identifier of the examined object or a part thereof. For instance, forming a word with three objects which have as information "C", "A" and "T" respectively may trigger an action that plays a movie about a cat. In this case, the system is aware that movie playback is the action and the combination of pieces of information is used to determine the desired movie. Another possibility is that one piece of information defines the action, e.g. select media, and another piece of information defines which media, in which case the combination of both pieces of information lead to the playback of the desired media. Alternatively, the examined object or a combination of examined objects can define the context for an action. For instance, a system for retrieving tourist information can use two examined objects, one showing a number of cities and the other showing general topics such as a guided city tour, park, museums, etc. A user can then select a city and a general topic such as museums and the system can be triggered to show a video with information relating to the most popular museums in that city.

The examined objects define the actions, either on their own or in a combination of the examined objects. When a single examined object is used, the system may read multiple pieces of information from the same examined object sequentially, e.g. each time a user rotates the examined object or changes the position of the examined object and then combine these pieces of information to determine the desired action. Therefore, new actions can easily be defined by either creating new examined objects holding information for the new actions, or defining the new actions for existing examined objects or for a new combination of existing examined objects. The examining objects are able to obtain information contained in the examined objects. The examining objects can retrieve a part or all of the information stored in an examined object. This enables the examined object to trigger actions, for instance by sending commands to the service delivery network directly or via some intermediary device such as a set-top box, interacting with a local media storage such as a DVD player or interacting with a channel tuner of a television set based on the combination of the retrieved information pieces.

An optional feature of the system for interacting with one or more services according to the present invention is that the service delivery platform may be a media delivery platform adapted to deliver media to a user or a session delivery platform adapted to establish sessions for a user.

Media delivery platforms are designed to provide media to a user. Platforms such as an Internet Protocol Television (IPTV) platform can offer television broadcasts, live sports and events, media-on-demand, etc. as services to the users. This means that a user must be able to interact with the media delivery platform, for instance to .. request media-on-demand content or select a different television channel. In addition, a media delivery platform typically offers a way for a user to provide feedback, interact with the television program or participate in televoting. A session delivery platform such as an IP Multimedia Subsystem (IMS) network also allows the delivery of media and in addition allows establishing a session between various terminal. Sessions between terminals enable communication between these terminals. This communication can involve users talking to each other, sending text messages, pictures, audio fragments or video messages.

Media delivery networks and session delivery networks generally have the basic functionality which is needed to incorporate the present invention. As a result, the functionality of these networks can be enhanced by the present invention. This enables an operator of such networks to provide new ways of interacting with its services and to extend these services without significant modifications to its networks or applications.

Optionally, as is indicated in claim 3, the means for determining an action may be adapted to select media based on the information held by the examined objects.

Thus, one particular action for which the current invention is defiantly advantageous is the act of selecting a media item in a media delivery platform.

An optional feature of the present invention is that the system for interacting with one or more services according to the present invention may be characterized in that examined objects comprise one or more tokens for holding information.

A token is a general storage medium for information which enables fast retrieval of information from the token. The information stored in the token can be a token identifier or one or more commands that can be used by the examining object in combination with other identifiers or commands to determine an action. The token identifier can be a serial number, a tag such as a number, a letter, a location, a type of sport. Commands can be instructions for the media delivery system or instructions for the examining objects. For instance, a command token to establish a session can be used in combination with a token that identifies a user to establish a voice communication session with that user. Another example is a command token for media playback and an identification token that identifies a television channel that is to be shown.

If an examined object contains a single token, a user would need a large amount of examined objects to allow all possible combinations. Therefore, it can be beneficial to include multiple tokens in a single examined object. For instance, a user can have two examined objects with each ten tokens, labelled 0 to 9. A combination of these two tokens can then be used to identify the television channel that the user wants to receive.

A further optional feature of the system for interacting with one or more services according to the present invention is that examining objects may comprise one or more token readers for retrieving information.

The token reader is able to retrieve information from the tokens in the examined objects. The token reader may be able to trigger actions or pass the information to other intermediary parts of the system to trigger the actions related to the information on the token. A token reader can be used to read a single token, for instance in case each examined object contains one token, or to read a specific token from an examined object. It may also be possible for a single token reader to retrieve information from several tokens simultaneously, or to read several tokens sequentially.

In a specific embodiment of the present invention, the tokens and token readers may be implemented as Radio Frequency Identification (RFID) tokens and Radio Frequency identification (RFID) token readers.

RFID tags can be used to provide information without any physical contact between the examining object and the examined objects. This means that an examined object can be placed in the vicinity of the examining object to enable the examining object to retrieve the information stored in the RFID tokens of the examined object. One advantage of this, is that a user is not required to place the examined objects in an exact position in relation to the examining object. Consequentially, a person who has difficulties of recognizing marked slots for examined objects, or who does not have the physical abilities to place the examined object in such a slot, can still use the present invention to select media or interact with media.

Further, RFID tags can cover a larger area than objects placed near each other. This means that the system can be used in an entire room. This removes space restrictions and allows for new applications such as board games which feature interaction with media that can be played throughout an entire building. For instance, a murder game can be situated in a house, each user can carry an RFID tag to identify the users and RFID tags to define actions performed by the user such as move or look at something and each room can have one or more RFID tag readers and the combination of these elements can be used to trigger audiovisual effects for users in a particular room or at a particular item.

An alternative to RFID tags is optical recognizable information such as barcodes, images, text or light pulses. However, these optical methods require a line of sight between the examined object and the examining object. This reduces the range wherein an examined object can be located and as such may be limiting to the possible applications for the system. Another alternative to RFID and optical recognizable information is the use of electrical contacts. Each token may contain an electrical contact to the outside of the examined object, which is then connected to the examining object. However such connections would require wiring between the examining object and the examined objects or bare contact points. Wiring generally involves connectors, and both wiring and connectors can be damaged during their use and can be difficult to connect. Bare contact points may lead to small electrical shocks when a person puts a limb on two contact points. In addition, bare contacts can be damaged or wear off when the examined objects are changed often.

In another alternative embodiment of the present Invention, the tokens and token-readers respectively may be implemented as Near Field Communication (NEC) targets Near Field Communication (NFC) initiators.

Near Field Communication (NFC) offers similar advantages as RFID. It allows an NFC initiator to retrieve information from an NFC target which is located near the NFC initiator. However, NFC generally has a smaller area of effect compared to RFID and is therefore better suited for applications which require little movement of the targets or initiators. This means that an overlap between two NFC initiators is less likely. For instance, two neighbours having their own television set, each with an examining object connected thereto and which are located close to each other. If the examining objects have a large area of effect, they may read information from tags located at the other neighbour which can result in incorrect readings and corresponding actions. In addition, NFC is used in mobile devices, which creates new opportunities, for instance media interaction through a mobile telephone or personal digital assistant.

Optionally, the system for interacting with one or more services according to the present invention may be characterized in that the examined objects are polyhedra.

The surfaces of a polyhedron are typically flat and have straight edges. As a result, the examined objects can easily be placed on top of an examining object without a need for special slots for each examined object. The polyhedron can for instance be a regular pyramid, a cube, a cuboïd, a paralleiepiped, a dodecahedron, etc. Alternatively, the examined objects may have rounded shapes or circular surfaces, for instance a cylinder or a bal. However, these may require openings, dents or recesses in the examining object to place the curved surfaces in. In another alternative embodiment, the examining object can be a polyhedron which can be placed on an examined object without the need for special slots. For instance in case a board is the examined object in a board game and each pawn is an examining object which retrieves information from the board.

It is easy for a person to pick up a cube, a pyramid or a cylinder and move them to another location on or near an examining object. Changing their orientation, for instance turning them upside down or bringing another surface to the front requires little effort and allows an examining object to retrieve additional pieces of information. Flat surfaces also allow for easy placement of the objects, there is less chance for the object to tip onto a different side or to fall in a position which cannot be read by an examining object.

Further optionally, the examining objects In the system for interacting with one or more services according to the present invention may comprise a surface with one or more slots for holding the examined objects.

In embodiments where physical contact between the examining and examined objects is required, for instance because electrical contacts are used to read the information or when line of sight is required for reading information, it can be beneficial to provide a slot in the examining object Such a slot can be a marking on the examining object which indicates the location of one or more token readers. The slot may also be a recess in the surface wherein the examined object can be placed. The recess can be shallow or deeper. A shallow recess can be sufficient for a user to feel that the examined object is placed in the slot correctly. A deeper recess can provide a way of firmly retaining the object in place on the reader. However, a recess is optional, a marking in paint or color can be sufficient to indicate the location, or there may not even be a marking or physical slot at all. A slot or recess can improve the experience of a particular group of users. It can provide a feedback to the user that they placed the examining objects in a correct manner at a correct place and thus ensure them that their requested action can be performed based on the position.

Alternatively, there can be a single examined object which contains a number of tokens, each indicated by a slot or marking. The examining object can then be placed on such a slot to read the token underneath. This can for Instance be used in a board game with media interaction. Each position on the board has a token with information, thus the board is the examined object, and the pawn of a player can be the examining object.

Further optionally, in the system for interacting with one or more services according to the present invention the means for determining an action may be adapted for communicating with the service delivery platform.

Thus, the network or service delivery platform may be able to determine the action based on the pieces of information provided by the examining objects. The network's ability may be to combine object identifiers present in the examined objects, e.g. in situations where there is no explicit command information on the examined objects. Centralizing such abilities in the service delivery platform or network is beneficial because it enables an operator to define new actions, combinations, objects, etc. in a central location which can be accessed by all systems. Thus, a single update of the information in the service delivery platform enables all users to access new features if they currently posses the appropriate objects.

Still optionally, the system for interacting with one or more services according to the present invention may be characterized in that the means for determining an action comprise one or more out of:
- a Token Combination System (TCS) for determining an action based on a combination of one or more examined objects;
- a Tangible Media System (TMS) for filtering information from examined objects and delivering the information to a media source;
- an Object Definition System (ODS) for selecting information from one or more examined objects; and
- an Object Naming Service (ONS) for locating the Tangible Media System (TCS) or the Object Definition System (ODS) in a network.

The examining object may be able to determine actions based on the combination of pieces of information that are retrieved from examined objects. However, this implies a localized implementation which is not always beneficial. For instance, in particular applications such as a kiosk with tourist information, information relating to stores in a shopping mall or street, etc. the use of objects to easily select media or information can be localized as the system is less likely to change. i.e. once the kiosk has been set up, the information therein stays the same for a long time and thus the objects to control the information can remain unchanged for a long time.

However, media-on-demand services have a rapid changing catalogue, digital television is open to new features, media broadcasters are constantly looking for new opportunities to create new TV formats, request user feedback, use televoting systems or other forms of interaction with the TV viewers. Therefore it can be beneficial to centrally manage how information in examined objects should be interpreted and which actions should be performed. One way of creating a central management is by enabling the examined objects to interact with a Token Combination System (TCS). In a TCS, an operator can define which particular actions should be triggered based on the information obtained from the tokens. The TCS can be used to determine the actions that are needed based on a combination of tokens or examined objects and how these objects are handled, for instance, the order of placing the objects, rotating the objects or moving the objects. A TCS allows the operator to deploy a new service to his customers and create actions that can be triggered with the examined objects that are currently in possession of the userbase. It also allows an operator to define actions for combinations of new objects or combinations with new and existing objects. The new objects can then be distributed to customers through sales or give-away actions or which can be part of games or other products that are available to users. For instance, a company can include examined objects in their product packages, which can be used by the users to receive information about other products via the media delivery platform or to request updated user manuals.

The Object Definition System (ODS) can be used to select relevant information that is read from an examined object. For instance, if a single token contains information that can be used or reused for various applications, the ODS can be used to select the correct pieces of information which are relevant for the TCS to determine the action. Thus, the examining object retrieves all the information from a particular token or even all tokens in an examined object, and the ODS can then remove all the irrelevant information. This way, a single token can be used for multiple purposes which can lead to a small amount of examined objects that are needed for a large number of applications or services.

The Object Naming Service (ONS) can be used to determine where a particular ODS, TMS or TCS is located. An ODS, TMS or TCS can contact the ONS and request an address of an ODS, TMS or TCS which may be located in the same network or a different network. The ONS can for instance be a database containing IP addresses for a number of ODS, TMS and TCS services, a variant implementation of the Domain Name System (DNS) protocol, etc. The advantage of an ONS is that multiple media delivery network operators can define their own services and the use of particular examined objects with these services and that the operators can share this information with other operators. In addition, companies who provide examined objects to users can set up their own TCS ,TMS and/or ODS service and register it in one or more ONS services. This way, all operators of media delivery networks can access the TCS, TMS and ODS of these companies which means the information therein does not have to be duplicated to each operator.

### Brief Description of the Drawings

Fig. 1 illustrates a logical overview of an embodiment of the system for interacting with media according to the present invention, connected to a service delivery platform;
Fig. 2 illustrates an examining object 201 and examined objects 202, 203 and 204 according to an embodiment of the invention;
Fig. 3a illustrates an alternative embodiment of an examined object according to the present invention; and
Fig. 3b illustrates yet another alternative embodiment of an examined object according to the present invention.

### Detailed Description of Embodiment(s)

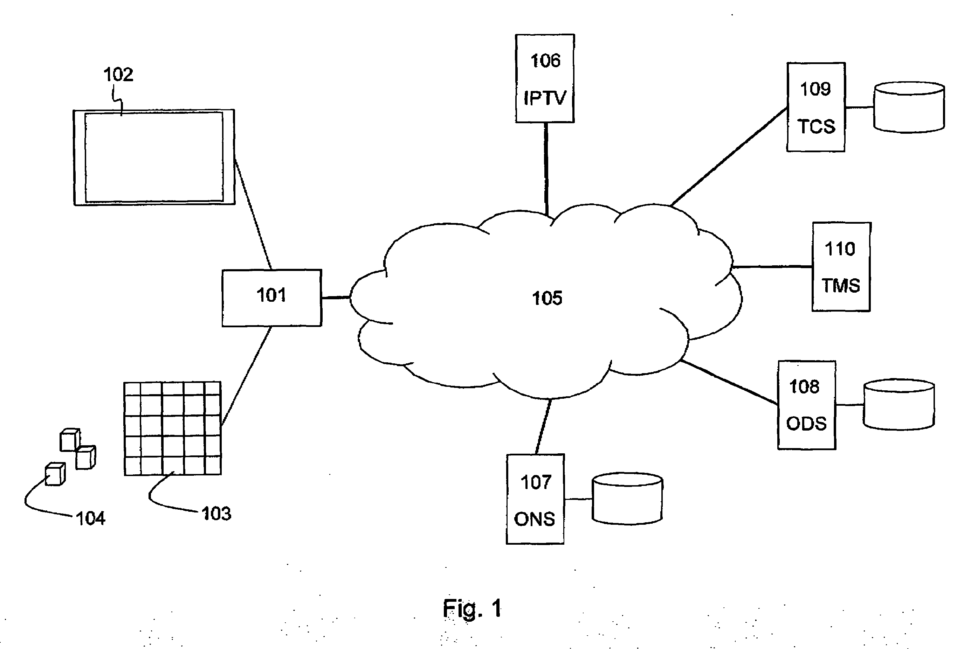

In the embodiment as shown in Fig. 1, a user has a set-top box (STB) 101 which is connected to a television set 102 and to tablet 103 and the user has a set of cubes 104 which fit on the tablet 103. The set-top box 101 is further connected to a broadband access network 105. The broadband access network 105 enables the set-top box 101 to communicate with services such as the IPTV system 106. In addition, the broadband access network 105 provides a connection to services such as an Object Naming Service (ONS) 107, an Object Definition System (ODS) 108, a Token Combination System (TCS) 109 and the Tangible Media System (TMS) 110. In an alternative embodiment, ONS 107, ODS 108, TCS 109 and TMS 110 are part of the IPTV system 106. In another alternative embodiment a selection of ONS 107, ODS 108, TCS 109 and TMS 110 is located in the IPTV system 106 and the remainder is located in the broadband access network 105, for Instance ODS 108 and TCS 109 are part of the IPTV system 106 and ONS 107 and TMS 110 are part of the broadband access network 105.

A user can start interaction with the IPTV system 106 by placing the cubes 104, i.e. examined objects, on the tablet 103, i.e. the examining object or by placing a single cube on the tablet 103 and rotating this cube into various positions. In one embodiment, the user can be a child playing with cubes 104 with a letter on each side. The tablet 103 reads information from each cube, for instance information which indicates the letter that is on top of the cube 104. This information is then transmitted to the set-top box 101 which contacts ONS 107 to find the address of TMS 110 and the set-top box 101 then forwards the information to the TMS 110 over broadband access network 105. The TMS 110 filters the information, for instance duplicated information can be removed, and selects the relevant information, for instance identification of the cube, user and the tokens that were read. The TMS 110 can interact with ODS 108 to determine the meaning of the information read from the cube 104. For instance, the cube 104 can deliver abstract information such as an identification number which can be mapped to actions or functions in the ODS 108. In addition, TMS 110 can interact with TCS 109 to determine the desired actions based on the information received from the cubes 104, the context such as the application running at the user and the combination of used cubes 104. In addition, TCS 109 may use information such as the order wherein the cubes 104 were placed on board 103 or rotations of the cubes 104. Once TMS 110 has determined the actions that are desired by the user, TMS 110 instructs the IPTV system 106. For instance, the child places cubes 104 with letters on board 103. The board 103 reads information related to the letters on top of the cubes 104 and transmits this information through the set-top box 101 over broadband access network 105 to TMS 110. The TMS 110 system receives and interprets the letters and learns from the TCS 109 system that the child wants to see a video fragment related to the word on the cubes 104. The TMS 110 then sends a command which triggers IPTV system 106 to start the playback of the video fragment on television set 102. The IPTV system 106 can transmit the video fragment to set-top box 101 which then shows the video fragment on television set 102.

In an alternative embodiment, the board 103 can be coupled to a database which contains information about a limited number of items, for instance points of interest in cities and the target group for those points of interest. In such an embodiment, only a set of examined objects, an examining object, a display and a media storage is required. The board can then determine the action based on the used examined objects and the combination of these. In another alternative embodiment, the board is able to send commands directly, for instance basic commands to make a selection of television channels and media-on-demand items can be sent by the board to the IPTV system.

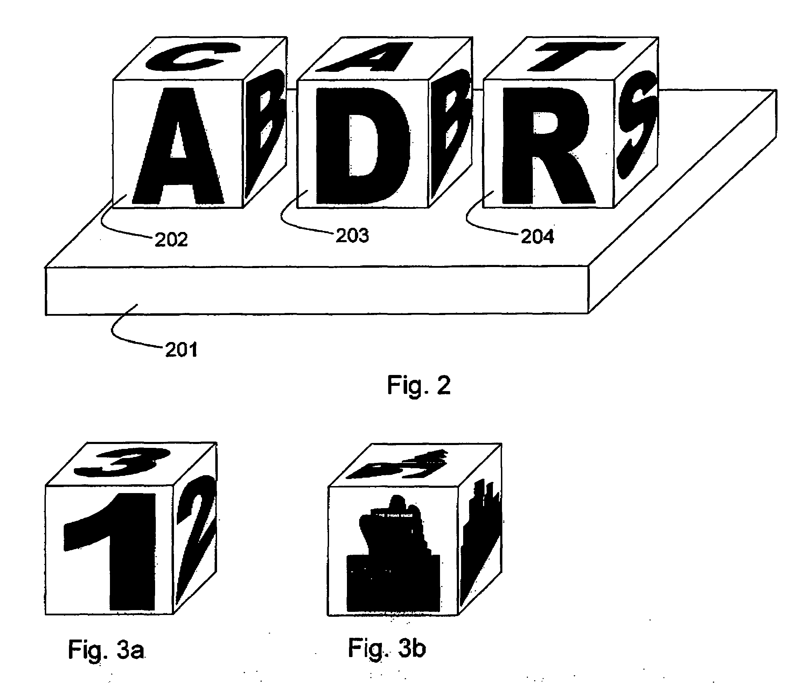

Fig. 2 illustrates a board 201 which acts as examining object and three cubes 201, 202 and 203 which act as examined objects. Each side of the cubes 202, 203 and 204 has a label with a letter. Underneath each label is an RFID tag (not shown in the figure) which contains information to identify the letter of the opposite side. For instance, cube 202 has the letter C facing upward and the RFID tag identifying that letter C is on the side facing downwards, i.e. the side which is placed on board 201. The board 201 contains three RFID tag readers which are located underneath the cubes 202, 203 and 204. In an alternative embodiment, the board 201 may contain a single RFID tag reader which reads each RFID tag in the cubes 202, 203 and 204 sequentially.

Fig. 3a and 3b show alternative labels for the cubes 202, 203 and 204. These cubes can contain an RFID tag for each label or a single RFID tag for all the labels. The cube shown in Fig. 3a Is labelled with numbers, which can be used to select channels on a television set, answer questions in a quiz, make an offer in an auction, enter a personal identification number, etc. Alternatively, the cube shown in Fig. 3a can be a ten-sided dice containing the numbers 0 to 9, or the object can be shaped similar to a ten-sided dice. The cube shown in Fig. 3b has pictures on each side, in this embodiment illustrating various tourist places such as boat tours, parks to visit or a skyline to indicate a guided city tour.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, vacations or equivalents that fall within the spirit and scope of the basic underlying principles and whose essential attributes are claimed In this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for interacting with one or more services in a service delivery platform (106), said system comprising means for determining an action, **characterized in that** said system comprises:
- one or more examined objects (104; 202, 203, 204) able to hold information indicative for said action and/or said media; and
- one or more examining objects (103; 201) able to retrieve said information from said examined objects (104), and
further **characterized in that** said means for determining an action are adapted to determine said action based on a combination of at least two pieces of said information.

2. The system for interacting with one or more services according to claim 1, **characterized in that** said service delivery platform (106) is one of the following:
- a media delivery platform adapted to deliver media to a user (101); or
- a session delivery platform adapted to establish sessions for a user (101).

3. The system for interacting with one or more services according to claim 1, **characterized in that** said means for determining an action are adapted to select media based on said combination of at least two pieces of said information.

4. The system for interacting with one or more services according to claim 1, **characterized in that** said examined objects (104; 202, 203, 204) comprise one or more tokens for holding said information.

5. The system for interacting with one or more services according to claim 1, **characterized in that** said examining objects (103; 201) comprise one or more token readers for retrieving said information.

6. The system for interacting with one or more services according to claim 4 or 5,
**characterized in that** said one or more tokens and said one or more token readers respectively are one or more Radio Frequency Identification (RFID) tokens and one or more Radio Frequency identification (RFID) token readers.

7. The system for interacting with one or more services according to claim 4 or 5, **characterized in that** said one or more tokens and said one or more token readers respectively are one or more Near Field Communication (NFC) targets and one or more Near Field Communication (NFC) initiators.

8. The system for interacting with one or more services according to claim 1, **characterized in that** said examined objects (104; 202, 203, 204) and/or said examining objects (103; 201) have a polyhedra shape.

9. The system for interacting with one or more services according to claim 1, **characterized in that** said examining objects (103; 201) comprise a surface with one or more slots for holding said examined objects (104; 202, 203, 204).

10. The system for interacting with one or more services according to claim 1, **characterized in that** said means for determining an action are adapted for communicating with said service delivery platform.

11. The system for interacting with one or more services according to claim 10, **characterized in that** said service delivery platform comprises one or more out of:
- a Token Combination System (TCS) (109) for determining an action based on a combination of said one or more examined objects;
- a Tangible Media System (TMS) (110) for filtering said information from said examined objects (104; 202, 203, 204) and delivering said information to a media source (106);
- an Object Definition System (ODS) (108) for selecting information from said one or more examined (104; 202, 203, 204) objects;
- an Object Naming Service (ONS) (107) for locating said Tangible Media System (TMS) (110) and/or said Object Definition System (ODS) (108) and/or said Token Combination System (TCS) in a network.
